# EUROPEAN PATENT APPLICATION

(11) **EP 4 726 363 A1**
(43) Date of publication of application: **15.04.2026**
(21) Application number: 24819272.6
(22) Date of filing: 31.05.2024
(51) Int. Cl.: G01N 15/1409, G01N 15/1429

(54) **MICROPARTICLE SEPARATING DEVICE AND MICROPARTICLE SEPARATING METHOD**

(30) Priority: 07.06.2023 JP 2023093631
(71) Applicant: Sony Group Corporation, Tokyo 108-0075 (JP)
(72) Inventor: FUJIBAYASHI, Shigeki, Tokyo 108-0075 (JP); MIYATA, Hiromu, Tokyo 108-0075 (JP)
(74) Representative: D Young & Co LLP
(86) International application number: PCT/JP2024/020070
(87) International publication number: WO 2024/253042

(57) **Abstract**

To improve the convenience of a microparticle separating device. A microparticle separating device includes a droplet generation unit, a sheath fluid introduction portion, a sample fluid introduction portion, and a vibration application unit. The droplet generation unit discharges a droplet containing a sample fluid and a sheath fluid from a discharge port. The sheath fluid introduction portion introduces the sheath fluid into the droplet generation unit. The sample fluid introduction portion is formed in a tubular shape inserted in the droplet generation unit and introduces the sample fluid in a direction toward the discharge port. The vibration application unit includes a vibration portion to be in contact with the sheath fluid and applies vibration to the sheath fluid from a direction different from an introduction direction of the sample fluid.

## Description

### Technical Field

The present disclosure relates to a microparticle separating device and a microparticle separating method.

### Background Art

A microparticle separating device for analyzing microparticles contained in a liquid is used for measuring microparticles such as cells. This microparticle separating device generates droplets containing microparticles and separates the droplets in accordance with the microparticles contained therein. The droplets generated by the microparticle separating device are composed of a sheath fluid enclosing a sample fluid containing microparticles such as cells. The microparticle separating device is provided with a nozzle for discharging droplets. The sample fluid and the sheath fluid are introduced into the nozzle. At this time, the sample fluid flows in the direction toward a droplet discharge port using a tubular introduction tube. In addition, vibration is applied to the sheath fluid by a vibration application unit. This vibration forms droplets at the discharge port of the nozzle.

In order to align the transmission direction of the waves of the sheath fluid generated by the vibration application unit with the introduction direction of the sample fluid, a device provided with a vibration application unit including an annular vibration portion that surrounds the sample fluid introduction tube has been proposed (see, for example, PTL 1).

### Citation List

### Patent Literature

[PTL 1] JP 2012-137507 A

### Summary of Invention

### Technical Problem

However, in the above-described known technique, the sample fluid introduction tube and the vibration portion of the vibration application unit are coaxially arranged, which results in a problem of reduced convenience, for example, a complicated fluid-sealing structure of the nozzle.

In view of this, the present disclosure proposes a microparticle separating device and a microparticle separating method with improved convenience.

### Solution to Problem

A microparticle separating device according to the present disclosure includes a droplet generation unit configured to discharge a droplet containing a sample fluid and a sheath fluid from a discharge port, the sample fluid containing microparticles; a sheath fluid introduction portion configured to introduce the sheath fluid into the droplet generation unit; a sample fluid introduction portion formed in a tubular shape inserted in the droplet generation unit, the sample fluid introduction portion being configured to introduce the sample fluid in a direction toward the discharge port; and a vibration application unit including a vibration portion to be in contact with the sheath fluid, the vibration application unit being configured to apply vibration to the sheath fluid from a direction different from an introduction direction of the sample fluid.

### Brief Description of Drawings

Fig. 1 is a diagram illustrating a configuration example of a microparticle separating device according to an embodiment of the present disclosure.
Fig. 2 is a diagram illustrating a configuration example of a microparticle separating device according to a first embodiment of the present disclosure.
Fig. 3 is a diagram illustrating a configuration example of the microparticle separating device according to the first embodiment of the present disclosure.
Fig. 4 is a diagram illustrating a configuration example of the microparticle separating device according to the first embodiment of the present disclosure.
Fig. 5 is a diagram illustrating an example of waves of a sheath fluid according to the first embodiment of the present disclosure.
Fig. 6 is a chart showing an example of a microparticle separating method according to the first embodiment of the present disclosure.
Fig. 7 is a diagram illustrating a configuration example of a microparticle separating device according to a second embodiment of the present disclosure.
Fig. 8 is a diagram illustrating a configuration example of the microparticle separating device according to the second embodiment of the present disclosure.
Fig. 9 is a diagram illustrating an example of introduction of sheath fluid according to the embodiment of the present disclosure.
Fig. 10 is a diagram illustrating an example of bubble removal according to the second embodiment of the present disclosure.
Fig. 11 is a diagram illustrating a configuration example of a microparticle separating device according to a third embodiment of the present disclosure.
Fig. 12 is a diagram illustrating a configuration example of a vibration application unit according to the embodiment of the present disclosure.

### Description of Embodiments

Embodiments of the present disclosure are described in detail below with reference to the drawings. The description will be made in the following order. It should be noted that, in the following embodiments, the same reference numerals are assigned to identical components, and redundant descriptions will be omitted accordingly.
1. First Embodiment
2. Second Embodiment
3. Third Embodiment
4. Fourth Embodiment

### 1. First Embodiment

### Configuration of Microparticle Separating Device

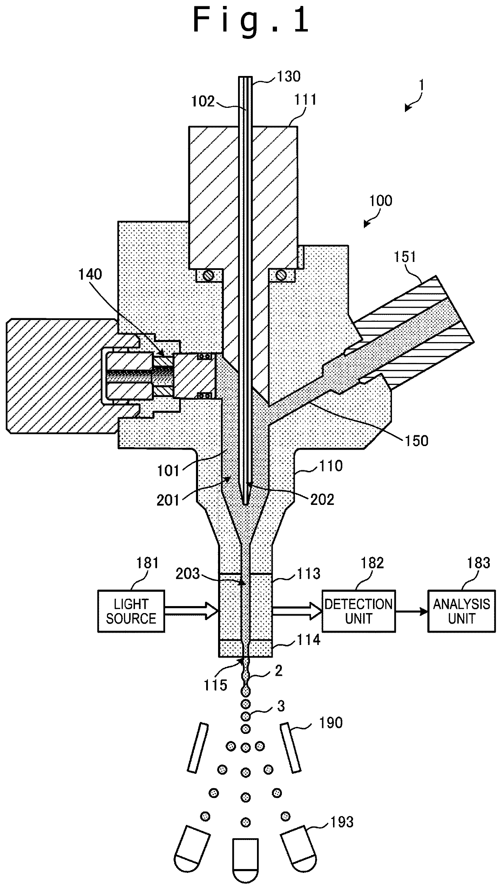

Fig. 1 is a diagram illustrating a configuration example of a microparticle separating device according to the embodiment of the present disclosure. Fig. 1 is a schematic view illustrating a configuration example of a microparticle separating device 1. The microparticle separating device 1 irradiates particles aligned in a channel with light, detects light emitted from each particle, applies a plus (+) or minus (-) charge, or no charge, to droplets containing the particles in response to the detection signal, and separates them into respective trajectories by deflection plates, thereby collecting target particles. The microparticle separating device 1 includes a droplet generation unit 100, a light source 181, a detection unit 182, an analysis unit 183, deflection plates 190, and collection containers 193.

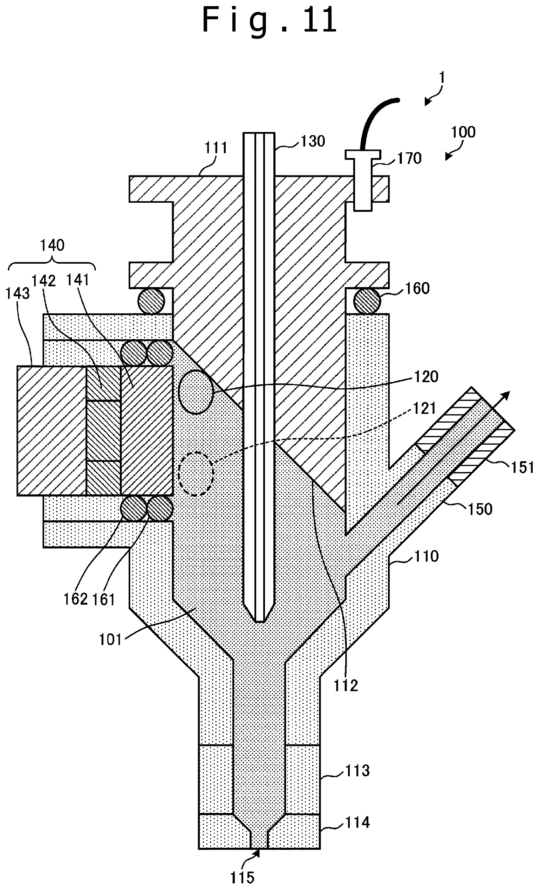

The droplet generation unit 100 generates a droplet containing a sample fluid (sample fluid 102) containing a sample such as cells and sheath fluid (sheath fluid 101) enclosing the sample fluid. Fig. 1 is a sectional view schematically illustrating the droplet generation unit 100. The droplet generation unit 100 includes a flow chamber 110, a flow cell 113, a nozzle 114, and a vibration application unit 140. Note that a discharge portion 150 and a discharge pipe 151, which will be described below in Fig. 11, are further illustrated in the droplet generation unit 100 in the drawing.

The flow chamber 110 is a container to which the sample fluid and the sheath fluid are introduced. The flow chamber 110 forms a channel of the introduced sample fluid and sheath fluid. In the flow chamber 110, a sample fluid introduction portion holding portion 111 that holds a sample fluid introduction portion 130 that introduces the sample fluid, and sheath fluid introduction portions 120 and 121 (not illustrated) that introduce the sheath fluid are disposed. The flow chamber 110 is provided, at an end portion, with an opening making up the outlet of the sample fluid and the sheath fluid.

The flow cell 113 is formed in a tubular form coupled to the opening of the flow chamber 110 and forms the channel of the sample fluid and sheath fluid. The flow cell 113 provides a region for measuring microparticles contained in the sheath fluid flowing through it.

The nozzle 114, which is coupled to the flow cell 113 and through which the sample fluid and the sheath fluid flow, discharges the sample fluid and the sheath fluid from a discharge port 115. The sample fluid and the sheath fluid discharged from the discharge port 115 form droplets.

Note that as described above, an electric charge is applied to the droplets. The electric charge can be applied using an electric signal supplied through an electrode connected to the flow chamber 110 or the like. Details of the electric charge application will be described with reference to Fig. 11.

The vibration application unit 140 applies vibration to a fluid containing the sheath fluid. The vibration application unit 140 applies vibration to the fluid containing the sheath fluid by supplying a drive voltage. In this manner, the fluid can be continuously converted into droplets, thereby generating a fluid stream (droplet flow).

Now a channel in the droplet generation unit 100 is described. The droplet generation unit 100 includes a channel through which at least the fluid containing the sheath fluid flows. Through this channel, the sample fluid containing particles and the sheath fluid flowing so as to enclose the sample fluid may flow as necessary. In the flow chamber 110, a channel 201 through which the sheath fluid flows and a channel 202 through which the sample fluid flows are formed. In addition, a channel 203 is formed in the flow cell 113.

The lowermost portion of the flow chamber 110 is tapered, and its tip end is coupled to the flow cell 113. A laminar flow in which the sheath fluid surrounds the sample fluid is formed in the interior of the flow chamber 110. While this laminar flow is maintained, the channel is transitioned to the channel 203 of the flow cell 113. In this case, in the channel 203, a state where particles flow in a substantially single line can be formed.

As described below, detection is performed through light irradiation in the channel 203 of the flow cell 113. The nozzle 114 that is detachable and attachable is disposed at the end point of the channel 203. The interior of the nozzle 114 is formed in a slope shape that continuously narrows from the outlet of the flow cell 113 toward the discharge port 115. Vibration is applied to the sample fluid and the sheath fluid by the vibration application unit 140 disposed in the flow chamber 110. Further, a liquid column 2 ejected from the discharge port 115 travels vertically downward while enlarging a constriction formed at the same frequency as the vibration of the vibration application unit 140, and changes into a droplet 3 at a break-off position from the discharge port 115.

The light source 181 emits light to microparticles flowing through the flow cell 113. As the light source 181, for example, a light source that emits laser light may be adopted.

The detection unit 182 detects light from particles contained in the sample fluid flowing through the flow cell 113. As described above, the flow cell 113 is irradiated with light from the light source 181. From the particles contained in the sample fluid flowing through the flow cell 113, light corresponding to the light from the light source 181 exits. The light from the particles is fluorescence and scattered light, and has properties corresponding to those of the particles. The detection unit 182 detects the light from the particles and outputs the detection result to the analysis unit 183. The detection unit 182 can be composed of an imaging element, for example.

On the basis of the detection result of the detection unit 182, the analysis unit 183 calculates the feature quantities of the particles contained in the sample fluid flowing through the flow cell 113. The analysis unit 183 calculates the feature quantities of the particles such as the size, shape, and internal structure of the particles from the fluorescence and scattered light detected by the detection unit 182, for example. In addition, the analysis unit 183 generates an electric signal for applying an electric charge to the droplet 3 on the basis of the calculated feature quantities and the separating conditions.

The deflection plates 190 deflect the travelling direction of each droplet 3 in the above-described fluid stream by the electrical force that acts between the deflection plate 190 and the electric charge applied to the droplet 3, thereby guiding the droplet 3 to a predetermined one of the collection containers 193 or the like. As illustrated in Fig. 1, two deflection plates 190 are disposed facing each other with the fluid stream therebetween. In Fig. 1, the facing direction of the deflection plates 190 is illustrated in the lateral direction. The deflection plates 190 are not particularly limited, and publicly known electrodes or the like may be used. Different positive or negative voltages are applied to the respective deflection plates 190. When the charged droplet 3 passes within the electric field formed by the voltages, an electrical force (Coulomb force) is generated, and each droplet 3 is attracted toward one of the deflection plates 190.

A plurality of the collection containers 193 may be arranged in a substantially single line in the facing direction of the deflection plates 190 (the lateral direction in Fig. 1). The collection containers 193 are not particularly limited, and may be a plastic tube, glass tube, or the like, for example. The number of the collection containers 193 is also not particularly limited, and Fig. 1 illustrates an example in which three collection containers are disposed. Note that the collection containers 193 may be disposed in a container for collection containers (not illustrated) in a replaceable manner. For example, the collection containers 193 may be disposed on a Z-axis stage (not illustrated) movable in a direction orthogonal to the discharging direction of the droplet 3 from the droplet generation unit 100 (the vertical direction in Fig. 1) and the facing direction of the deflection plates 190 (the lateral direction in Fig. 1).

Specifically, the "sample" contained in the sample fluid is microparticles in the present disclosure. The microparticles may be particles with a size that allows them to flow inside the channels of the sample fluid introduction portion 130 and the flow cell 113. In the present disclosure, the microparticles may be appropriately selected by a person skilled in the art. In addition, in the present disclosure, examples of the microparticles include biological microparticles such as cells, cell aggregates, microorganisms, and ribosomes, as well as synthetic microparticles such as gel particles, beads, latex particles, polymer particles, and industrial particles.

The biological microparticles (also referred to as "biological particles") may include chromosomes, ribosomes, mitochondria, organelles (cellular organelles), and the like that constitute various types of cells. The cells may include animal cells (e.g., blood cells) and plant cells. Such cells may particularly be blood-derived cells or tissue-derived cells. The blood-derived cells may be, for example, suspension cells such as T cells and B cells. The tissue-derived cells may be, for example, adherent cultured cells or adherent cells dissociated from tissues. The cell aggregates may include, for example, spheroids and organoids. The microorganisms may include bacteria such as Escherichia coli, viruses such as tobacco mosaic virus, and fungi such as yeast. Further, the biological microparticles may also include biological macromolecules such as nucleic acids, proteins, and complexes thereof. These biological macromolecules may be extracted from cells or may be contained in blood samples or other liquid samples.

The synthetic microparticles may be microparticles composed of, for example, an organic or inorganic polymer material or a metal. Examples of the organic polymer material include polystyrene, styrene-divinylbenzene, and polymethyl methacrylate. Examples of the inorganic polymer material include glass, silica, and magnetic materials. Examples of the metal include gold colloid and aluminum. The synthetic microparticles may be, for example, gel particles or beads, and in particular, may be gel particles or beads conjugated with one or a combination of two or more selected from oligonucleotides, peptides, proteins, and enzymes.

The shape of the microparticles may be spherical or substantially spherical, or may be non-spherical. The size and mass of the microparticles may be appropriately selected by a person skilled in the art in accordance with the sizes of the channels of the sample fluid introduction portion 130 and the flow cell 113. On the other hand, the sizes of the channels of the sample fluid introduction portion 130 and the flow cell 113 may also be appropriately selected in accordance with the size and mass of the microparticles. In the present disclosure, the microparticles may be provided, as needed, with chemical or biological labels, such as fluorescent dyes or fluorescent proteins. Such labels can facilitate the detection of the microparticles. The labels to be attached can be appropriately selected by a person skilled in the art. Molecules that specifically react with the microparticles (e.g., antibodies, aptamers, DNA, RNA, or the like) may be conjugated with the labels. In the present disclosure, the microparticles are preferably biological particles, and particularly, may be cells.

Note that the nozzle 114 in Fig. 1 is replaceable. Thus, the nozzle 114 including a channel with a diameter corresponding to the size of the "sample" can be attached to the droplet generation unit 100 and used. In addition, the flow cell 113 and the nozzle 114 may be replaceable.

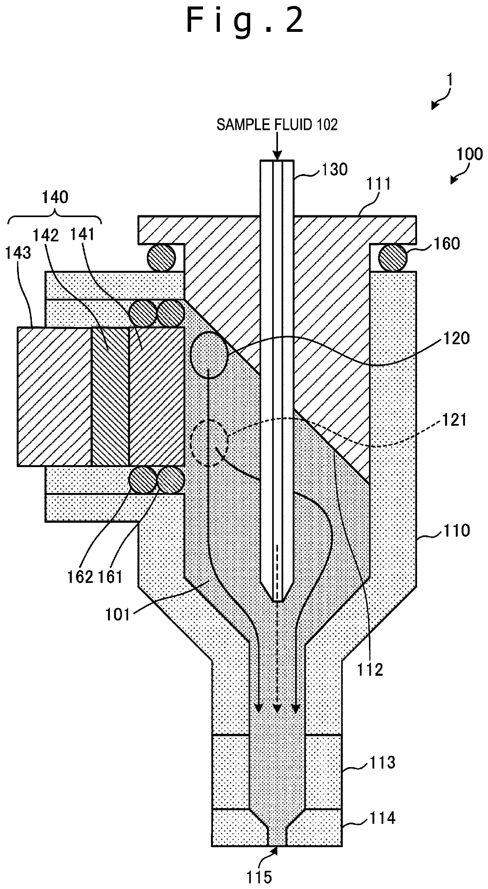

Fig. 2 is a diagram illustrating a configuration example of a microparticle separating device according to a first embodiment of the present disclosure. Fig. 2 is a schematic sectional view illustrating a configuration example of the microparticle separating device 1. Note that in the microparticle separating device 1 in Fig. 2, the parts other than the droplet generation unit 100 are not illustrated. The droplet generation unit 100 in Fig. 2 includes the flow chamber 110, the flow cell 113, the nozzle 114, the sample fluid introduction portion 130, the sample fluid introduction portion holding portion 111, the sheath fluid introduction portions 120 and 121, and the vibration application unit 140.

As described above, the flow chamber 110 discharges the droplet 3 from the discharge port 115. The flow chamber 110 in Fig. 2 is an example in which it is composed of a cylindrical housing with a tapered bottom portion. The bottom portion of the flow chamber 110 is provided with the discharge port 115. Note that the sample fluid introduction portion holding portion 111, which will be described below, is disposed at the top surface of the flow chamber 110.

The sheath fluid introduction portions 120 and 121 are for introducing the sheath fluid into the interior of the flow chamber 110. The ellipse indicated by the solid line in Fig. 2 represents the sheath fluid introduction portion 120. The sheath fluid introduction portion 120 represents an example in which the sheath fluid enters from the back side in Fig. 2. In addition, the ellipse indicated by the dotted line in Fig. 2 represents the sheath fluid introduction portion 121. The sheath fluid introduction portion 121 represents an example in which the sheath fluid enters from the front side in Fig. 2. The interior of the flow chamber 110 is brought into a state in which it is filled with the sheath fluid (the sheath fluid 101). The arrows indicated by the solid lines in Fig. 2 represent flows of the sheath fluid. Details of the configurations of the sheath fluid introduction portions 120 and 121 will be described below.

The sample fluid introduction portion 130 is for introducing the sample fluid (the sample fluid 102) into the interior of the flow chamber 110. The sample fluid introduction portion 130 is formed in a tubular shape inserted in the interior of the flow chamber 110, and causes the sample fluid 102 to flow toward the discharge port 115. The arrow indicated by the dotted line in Fig. 2 represents a flow of the sample fluid 102. As illustrated in Fig. 2, the sample fluid 102, together with the sheath fluid 101, forms a downward linear flow in the vicinity of the discharge port 115. At this time, the sheath fluid 101 flows enclosing the sample fluid 102. This flow of the sheath fluid and the sample fluid is referred to as a core flow.

The sample fluid introduction portion holding portion 111 holds the sample fluid introduction portion 130. The sample fluid introduction portion holding portion 111 is formed in a disk shape disposed at the top surface of the flow chamber 110, and is provided with the sample fluid introduction portion 130 inserted into the center portion. An O-ring 160 for fluid sealing is disposed between the sample fluid introduction portion holding portion 111 and the flow chamber 110. Note that a reflection portion 112, which will be described below, is disposed at the bottom portion of the sample fluid introduction portion holding portion 111.

The vibration application unit 140 applies vibration to the sheath fluid in the interior of the flow chamber 110. The vibration application unit 140 is fitted, via the O-ring, into an opening formed in the flow chamber 110. The vibration application unit 140 in Fig. 2 includes a vibration portion 141, a vibration generation element 142, and a vibration reflection portion 143. The vibration portion 141 is formed in a shape that makes contact with the sheath fluid 101, and vibrates in a direction of pressing the sheath fluid 101 to apply vibration to the sheath fluid 101. The vibration generation element 142 vibrates the vibration portion 141. The vibration reflection portion 143 reflects the vibration of the vibration generation element 142 to the vibration portion 141. By providing the vibration reflection portion 143, the efficiency of the vibration application unit 140 can be improved.

The vibration application unit 140 applies vibration to the sheath fluid 101 from the direction different from the introduction direction of the sample fluid 102. The vibration of the vibration portion 141 of the vibration application unit 140 generates waves in the sheath fluid 101. The waves of the sheath fluid propagate in a direction different from that of the above-described core flow. The vibration application unit 140 in Fig. 2 represents an example of generating waves of the sheath fluid in a direction orthogonal to the core flow direction.

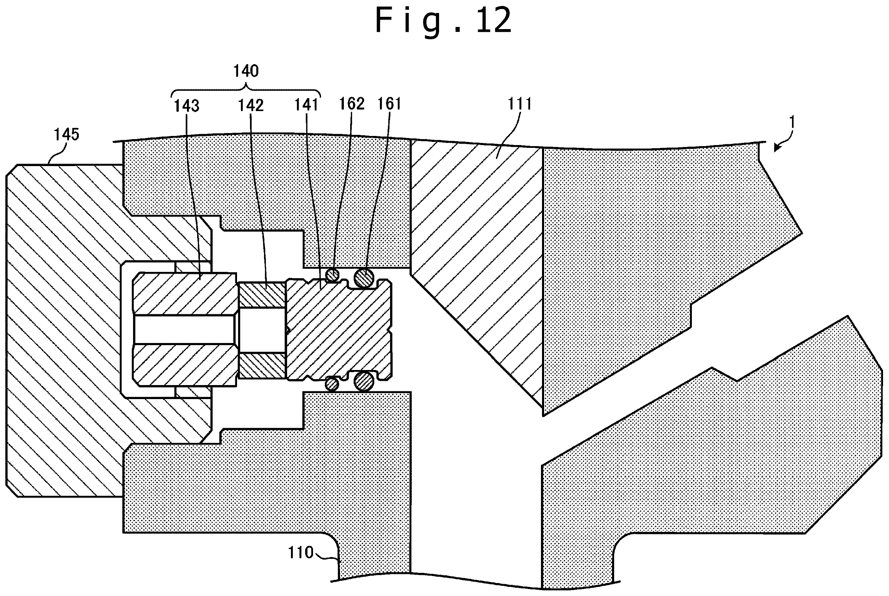

A plurality of O-rings (O-rings 161 and 162) may be disposed between the housing of the flow chamber 110 and the vibration portion 141 of the vibration application unit 140 in Fig. 2. Note that the configuration of the vibration application unit 140 will be described in detail with reference to Fig. 12.

The reflection portion 112 is disposed at the bottom portion of the sample fluid introduction portion holding portion 111 in Fig. 2. The reflection portion 112 reflects, in the introduction direction of the sample fluid 102, the waves of the sheath fluid 101 generated through vibration application by the vibration application unit 140. The reflection portion 112 may be formed by a tilted surface tilted with respect to the introduction direction of the sample fluid 102. The reflection portion 112 in Fig. 2 represents an example in which it is formed by a tilted surface tilted at 45 degrees with respect to the introduction direction of the sample fluid 102. With the reflection portion 112, the propagation direction of the waves of the sheath fluid 101 can be aligned with the introduction direction of the sample fluid 102. In this manner, the vibration can contribute to the generation of the droplet 3 without disturbing the core flow.

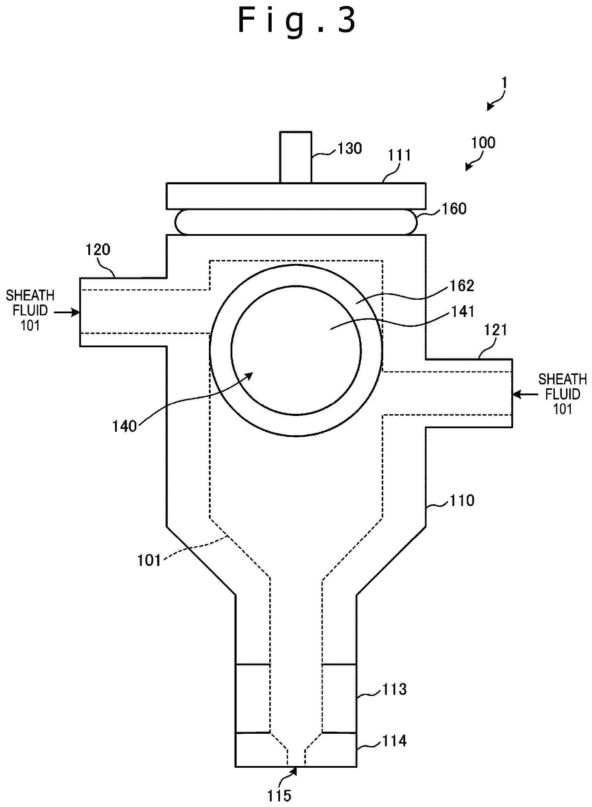

Fig. 3 is a diagram illustrating a configuration example of the microparticle separating device according to the first embodiment of the present disclosure. Fig. 3 is a schematic side view illustrating a configuration example of the microparticle separating device 1. As illustrated in Fig. 3, the vibration application unit 140 is disposed at the side surface of the flow chamber 110. Fig. 3 illustrates the vibration portion 141 in the vibration application unit 140. As illustrated in Fig. 3, the vibration portion 141 may be formed in a disk shape.

The sheath fluid introduction portions 120 and 121 are formed in shapes for introducing the sheath fluid 101 into the flow chamber 110 from different directions. In addition, the sheath fluid introduction portions 120 and 121 introduce the sheath fluid in the direction toward the vibration portion 141 in the flow chamber 110. In addition, the sheath fluid introduction portions 120 and 121 introduce the sheath fluid in a parallel direction as viewed from the direction normal to the surface of the vibration portion 141. Note that the broken line in Fig. 3 represents the region of the sheath fluid 101 in the interior of the flow chamber 110.

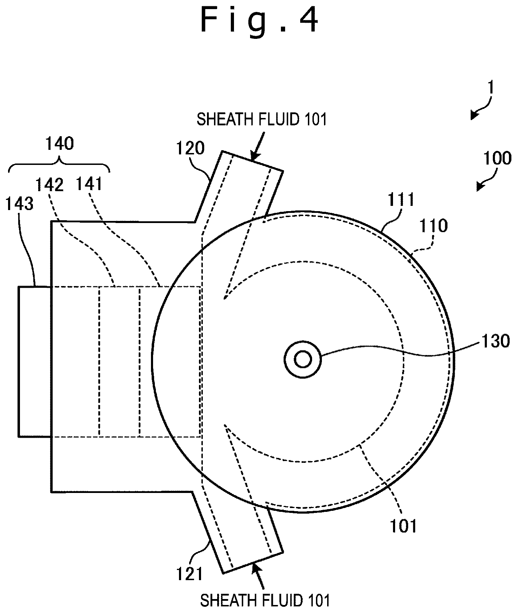

Fig. 4 is a diagram illustrating a configuration example of the microparticle separating device according to the first embodiment of the present disclosure. Fig. 4 is a schematic top view illustrating a configuration example of the microparticle separating device 1. As described above, the sheath fluid introduction portions 120 and 121 introduce the sheath fluid in the direction toward the vibration portion 141 in the flow chamber 110. Note that the broken line in Fig. 4 represents the region of the sheath fluid 101 in the interior of the flow chamber 110.

### Waves of Sheath Fluid

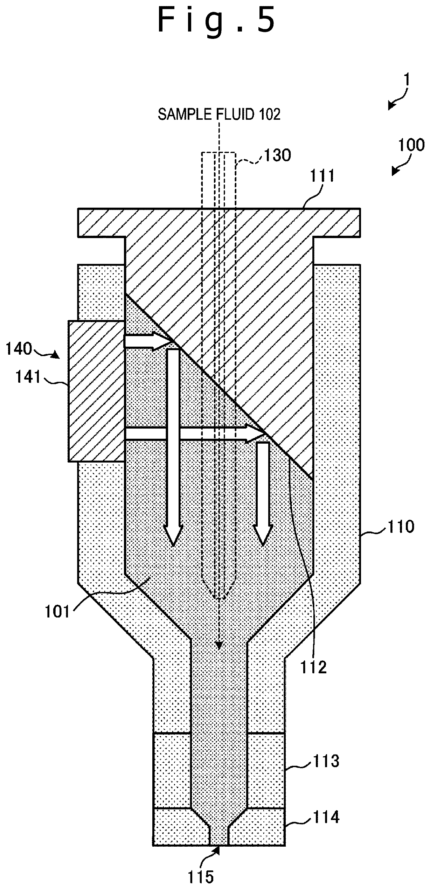

Fig. 5 is a diagram illustrating an example of waves of the sheath fluid according to the first embodiment of the present disclosure. Fig. 5 is a diagram illustrating an example of waves generated by the vibration portion 141 of the vibration application unit 140. The white arrows in Fig. 5 represent propagation directions of the waves of the sheath fluid 101. The waves of the sheath fluid 101 formed on the surface of the vibration portion 141 travel straight to reach the reflection portion 112. Thereafter, the waves of the sheath fluid 101 are reflected by the reflection portion 112, and become waves parallel to the introduction direction of the sample fluid 102.

In a known microparticle separating device, the vibration portion 141 is disposed at a position of the sample fluid introduction portion holding portion 111, and applies vibration to the sheath fluid 101 in a direction parallel to the introduction direction of the sample fluid 102. In this configuration, however, the configuration of the vibration application unit 140 is complicated due to the need to appropriately transmit the vibration force to the sheath fluid without obstructing the introduction of the sample fluid. In addition, the configuration of the microparticle separating device 1 is complicated due to the need for a fluid-sealing structure between the vibration application unit 140 and the sample fluid introduction portion 130 in addition to the fluid-sealing structure between the vibration application unit 140 and the flow chamber 110. Further, there is a problem in that replacement of the sample fluid introduction portion 130 and the sample fluid introduction portion holding portion 111 becomes difficult.

On the other hand, by adopting the configuration in which the sample fluid introduction portion 130 and the vibration application unit 140 are separated from each other as in the microparticle separating device 1 in Fig. 5, the configuration of the microparticle separating device 1 can be simplified. In addition, since the vibration application unit 140 is separated from the sample fluid introduction portion holding portion 111, the sample fluid introduction portion 130 and the sample fluid introduction portion holding portion 111 can be easily and inexpensively replaced.

### Microparticle Separating Method

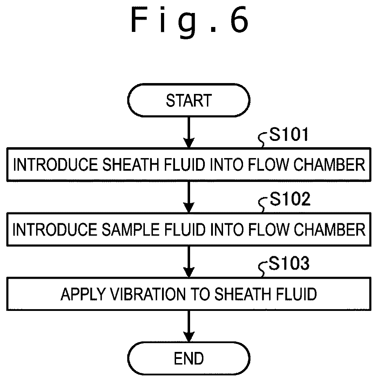

Fig. 6 is a chart showing an example of a microparticle separating method according to the first embodiment of the present disclosure. Fig. 6 is a flowchart showing an example of a microparticle molecule method in the microparticle separating device 1. First, the sheath fluid 101 is introduced from the sheath fluid introduction portions 120 and 121 into the flow chamber 110 (step S101). Next, the sample fluid 102 is introduced from the sample fluid introduction portion 130 into the flow chamber 110 (step S102). Next, the vibration application unit 140 applies vibration to the sheath fluid 101 (step S103). Through the above-mentioned procedure, the droplet 3 is generated.

As described above, the microparticle separating device 1 of the first embodiment of the present disclosure includes the vibration application unit 140 that applies vibration to the sheath fluid 101 in a direction different from the introduction direction of the sample fluid 102. In this manner, the configuration of the microparticle separating device 1 can be simplified.

### 2. Second Embodiment

In the microparticle separating device 1 of the above-described first embodiment, the sheath fluid introduction portions 120 and 121 for introducing the sheath fluid are disposed in the flow chamber 110. On the other hand, the microparticle separating device 1 of the second embodiment of the present disclosure is different from the above-described first embodiment in that a discharge portion that discharges the sheath fluid 101 is disposed in the flow chamber 110.

### Configuration of Microparticle Separating Device

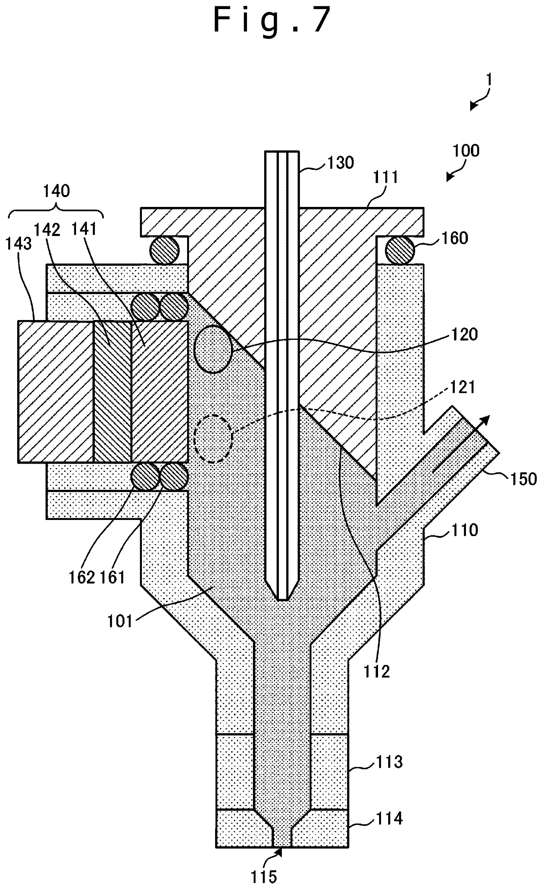

Fig. 7 is a diagram illustrating a configuration example of a microparticle separating device according to a second embodiment of the present disclosure. As with Fig. 2, Fig. 7 is a schematic sectional view illustrating a configuration example of the microparticle separating device 1. The microparticle separating device 1 in Fig. 7 is different from the microparticle separating device 1 in Fig. 2 in that the discharge portion 150 is disposed in the flow chamber 110.

The discharge portion 150 discharges the sheath fluid 101 in the flow chamber 110. The discharge portion 150 can discharge bubbles formed in the sheath fluid 101 together with the sheath fluid 101. When bubbles are generated in the sheath fluid 101, the vibration application to the sheath fluid 101 by the vibration application unit 140 is impeded. In view of this, by providing the discharge portion 150, the sheath fluid 101 containing bubbles is discharged. In this manner, the influence of bubbles can be reduced.

The discharge portion 150 in Fig. 7 represents an example in which it discharges the sheath fluid 101 obliquely upward. With the discharge portion 150 disposed facing upward as with this shape, it is possible to prevent the bubbles of the discharge portion 150 from returning to the interior of the flow chamber 110.

Note that the sheath fluid introduction portions 120 and 121 may be used as outlets for bubbles. Specifically, it is possible to adopt a configuration of discharging the sheath fluid containing bubbles from the sheath fluid introduction portion 121 while introducing the sheath fluid into the flow chamber 110 from the sheath fluid introduction portion 120. In addition, it is possible to adopt a configuration of discharging the sheath fluid containing bubbles from the sheath fluid introduction portion 120 while introducing the sheath fluid into the flow chamber 110 from the sheath fluid introduction portion 121.

### Configuration of Microparticle Separating Device

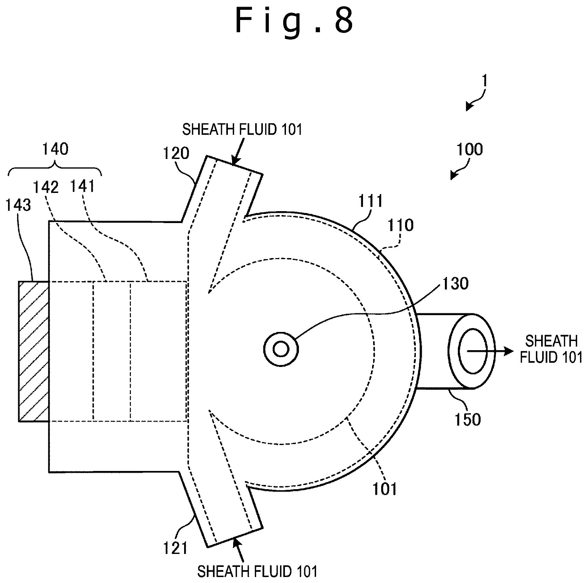

Fig. 8 is a diagram illustrating a configuration example of the microparticle separating device according to the second embodiment of the present disclosure. As with Fig. 4, Fig. 8 is a schematic top view illustrating a configuration example of the microparticle separating device 1. The microparticle separating device 1 in Fig. 8 is different from the microparticle separating device 1 in Fig. 4 in that the discharge portion 150 is provided.

### Introduction of Sheath Fluid

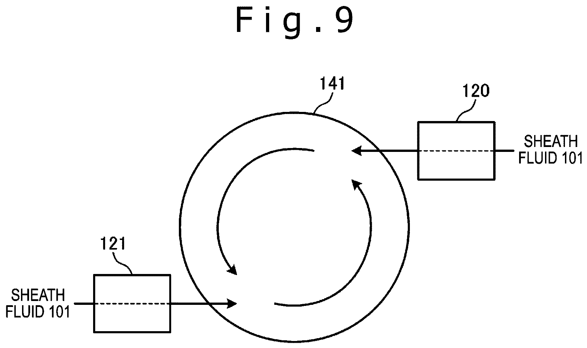

Fig. 9 is a diagram illustrating an example of introduction of a sheath fluid according to the embodiment of the present disclosure. Fig. 9 is a diagram illustrating an example of introduction of the sheath fluid 101 into the flow chamber 110 by the sheath fluid introduction portions 120 and 121. Fig. 9 illustrates the vibration portion 141 of the vibration application unit 140, the sheath fluid introduction portions 120 and 121, and a channel of the sheath fluid 101. The arrows in Fig. 9 represent channels of the sheath fluid 101.

As described above, the sheath fluid introduction portions 120 and 121 introduce the sheath fluid in the direction toward the vibration portion 141 in the flow chamber 110. In this manner, bubbles adhering to the surface of the vibration portion 141 can be removed. In addition, as described above, the sheath fluid introduction portions 120 and 121 are formed in shapes for introducing the sheath fluid 101 into the flow chamber 110 from different directions, and introduce the sheath fluid in a parallel direction as viewed from the direction normal to the surface of the vibration portion 141. Thus, a vortex-like flow of the sheath fluid along the surface of the vibration portion 141 is formed. This vortex-like flow of the sheath fluid can remove bubbles adhering to the entirety of the surface of the vibration portion 141. Even in a case where the vibration portion 141 is larger than the sheath fluid introduction portions 120 and 121, the bubbles can be removed. Note that the bubbles removed from the surface of the vibration portion 141 are discharged from the discharge portion 150.

### Removal of Bubbles

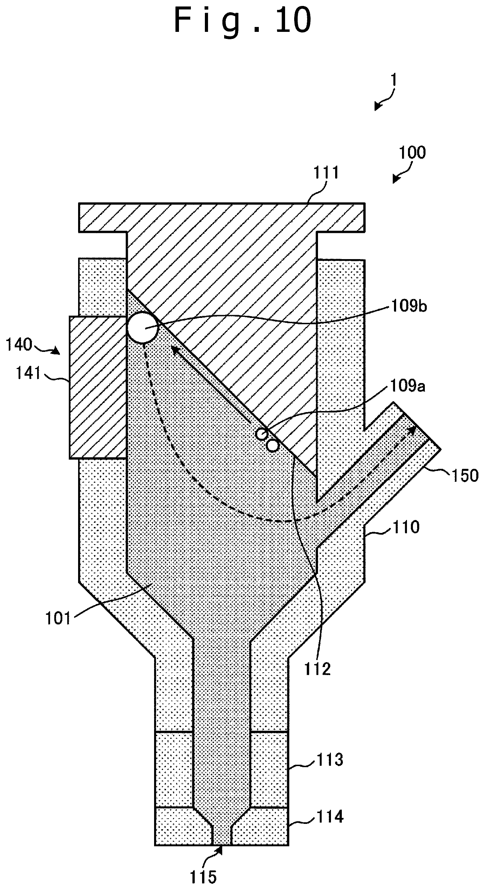

Fig. 10 is a diagram illustrating an example of bubble removal according to the second embodiment of the present disclosure. Fig. 10 is a diagram illustrating an example of removal of bubbles in the microparticle separating device 1. For convenience, in Fig. 10, the sample fluid introduction portion 130 and the sheath fluid introduction portions 120 and 121 are not illustrated. Bubbles 109 are illustrated in the sheath fluid 101 in Fig. 10. White circles in Fig. 10 represent the bubbles 109. Minute bubbles 109a are formed in the sheath fluid 101. The bubbles 109a move upward in the sheath fluid 101 and reach the tilted surface of the reflection portion 112. Thereafter, the bubbles 109a further move along the tilted surface of the reflection portion 112, and gather at the uppermost portion in the interior of the flow chamber 110. Here, the plurality of bubbles 109a are combined to form a large bubble 109b. The bubble 109b has a large size, and therefore flows together with the sheath fluid 101 and is discharged from the discharge portion 150. The arrow indicated by the broken line in Fig. 10 represents a discharge path of the bubbles 109b.

The configuration other than that of the microparticle separating device 1 is the same as the configuration of the microparticle separating device 1 of the first embodiment of the present disclosure, and therefore the description thereof is omitted.

As described above, the microparticle separating device 1 of the second embodiment of the present disclosure discharges bubbles generated in the sheath fluid 101 in the flow chamber 110 from the discharge portion 150. In this manner, the influence of bubbles can be reduced.

### 3. Third Embodiment

The microparticle separating device 1 of the above-described first embodiment includes the sample fluid introduction portion holding portion 111. On the other hand, the microparticle separating device 1 of the third embodiment of the present disclosure is different from the above-described first embodiment in that the sample fluid introduction portion holding portion 111 is used as a portion that applies an electric charge to the droplet 3.

### Configuration of Microparticle Separating Device

Fig. 11 is a diagram illustrating a configuration example of a microparticle separating device according to a third embodiment of the present disclosure. As with Fig. 2, Fig. 11 is a schematic sectional view illustrating a configuration example of the microparticle separating device 1. The microparticle separating device 1 in Fig. 11 is different from the microparticle separating device 1 in Fig. 4 in that an electrode 170 is connected to the sample fluid introduction portion holding portion 111. Note that the droplet generation unit 100 in Fig. 11 represents an example in which the discharge pipe 151 that is connected to the discharge portion 150 is provided.

As described above, the electrode 170 is connected to the sample fluid introduction portion holding portion 111 in Fig. 11. The electrode 170 supplies power for applying an electric charge to the droplet 3. Note that the sample fluid introduction portion holding portion 111 and the reflection portion 112 in Fig. 11 are composed of a conductive member such as a metal. By applying a voltage for electric charge application to the sample fluid introduction portion holding portion 111 and the reflection portion 112 through the electrode 170, an electric charge can be applied to the droplet 3. Note that the electrode 170 may be connected to a discharge pipe 151. In addition, it is possible to adopt a configuration in which the electrode is provided at each of the sample fluid introduction portion holding portion 111 and the discharge pipe 151 so that power is supplied.

In this manner, by disposing the electrode 170 at a position near the channel, it is possible to reduce delay in electric charge application and signal attenuation. As a result, the efficiency of electric charge application can be improved, and the charge state for each of samples such as cells contained in the droplet 3 can be more precisely controlled.

Note that in the microparticle separating device 1 using the microparticle separating device 1 in Fig. 11, an electric charge application portion 210 of a cell sorter 200 can be omitted.

The configuration other than that of the microparticle separating device 1 is the same as the configuration of the microparticle separating device 1 of the first embodiment of the present disclosure, and therefore the description thereof is omitted.

In this manner, the microparticle separating device 1 of the third embodiment of the present disclosure uses the sample fluid introduction portion holding portion 111 and the reflection portion 112 as electric charge application portions. In this manner, the efficiency of electric charge application to the droplet 3 can be improved.

### 4. Fourth Embodiment

A configuration example of the vibration application unit 140 is described below.

### Configuration of Vibration Application Unit

Fig. 12 is a diagram illustrating a configuration example of a vibration application unit according to the embodiment of the present disclosure. Fig. 12 is a schematic sectional view illustrating the portion of the vibration application unit 140 in the microparticle separating device 1 in Fig. 1. Note that in Fig. 12, the sample fluid introduction portion 130 and the like are not illustrated.

A vibration application unit protection portion 145 is attached to the vibration application unit 140 in Fig. 12. In addition, the vibration generation element 142 and the vibration reflection portion 143 in Fig. 12 represent an example in which they are formed in a cylindrical shape. In addition, the vibration portion 141 may be composed of a ceramic member. In this manner, the vibration portion 141 can be reduced in weight, thereby enabling it to apply high-frequency vibrations. A plurality of O-rings (the O-rings 161 and 162) are disposed between the vibration portion 141 and the housing of the flow chamber 110. By providing the plurality of O-rings, the vibration portion 141 can be attached parallel to the wall surface of the opening (attaching hole) of the housing of the flow chamber 110. In addition, during use of the microparticle separating device 1, displacement of the vibration portion 141 in an oblique direction due to the pressurized sheath fluid 101 can also be prevented.

In a known microparticle separating device, in some cases, the vibration portion 141 makes contact with the housing of the flow chamber 110 when the vibration application unit 140 is attached to the housing of the flow chamber 110 or when the vibration generation element 142 is driven. As a result, the frequency characteristics of the vibration portion 141 change in some cases. On the other hand, with the two O-rings (the O-rings 161 and 162) interposed between the vibration portion 141 and the housing of the flow chamber 110, a structure can be achieved in which the vibration portion 141 and the housing of the flow chamber 110 are not directly in contact with each other. In this manner, changes in the frequency characteristics of the vibration portion 141 during assembly or after driving of the vibration generation element 142 can be prevented, and the vibration of the vibration generation element 142 can be stabilized. It is preferable that the O-rings 161 and 162 be spaced apart. This is because the effect of preventing displacement of the vibration portion 141 is enhanced.

In addition, as illustrated in Fig. 12, the O-rings 161 and 162 may have different diameters. Specifically, the diameter of the O-ring 162 disposed on the rear side of the vibration portion 141 is set smaller than that of the O-ring 161 disposed on the front side of the vibration portion 141. In this manner, the vibration application unit 140 can be easily attached to and detached from the flow chamber 110.

As illustrated in Fig. 12, when the vibration application unit 140 is attached to the flow chamber 110, the vibration portion 141 on which the O-rings 161 and 162 are disposed is fitted into the opening of the flow chamber 110. By the action of the O-rings 161 and 162, the vibration portion 141 is tightly fitted into the opening of the flow chamber 110. However, if the O-rings 161 and 162 with the same diameter are brought into close contact with the opening wall surface, constriction from the opening wall surface becomes tight, making it difficult to attach and detach the vibration application unit 140 including the vibration portion 141. In view of this, as described above, the O-rings 161 and 162 having different diameters are disposed.

In addition, the O-ring 161 disposed on the front side of the vibration portion 141 serves a function of preventing leakage of the sheath fluid 101 to which high pressure is applied. On the other hand, the O-ring 162 disposed on the rear side of the vibration portion 141 needs only to prevent leakage of the sheath fluid 101 exuded from the portion of the O-ring 161. Therefore, even if the O-ring 162 with a reduced diameter is adopted, the leakage prevention capability for the sheath fluid 101 does not decrease. In this manner, by disposing the O-rings 161 and 162 with different diameters on the vibration portion 141, the vibration application unit 140 can be easily attached and replaced while preventing leakage of the sheath fluid 101 from the portion where the vibration application unit 140 is attached.

It should be noted that the processes described in this specification using the flowchart and sequence diagrams are not necessarily executed in the order illustrated. Some of the process steps may be executed in parallel. In addition, extra process steps may be adopted, and some of the process steps may be omitted.

Further, the effects described in this specification are merely illustrative and not limited, and other effects may also be provided.

The present technology may adopt configurations as described below.
(1) A microparticle separating device including:
   a nozzle configured to discharge a droplet containing a sample fluid and a sheath fluid from a discharge port;
   a sheath fluid introduction portion configured to introduce the sheath fluid into the nozzle;
   a sample fluid introduction portion formed in a tubular shape inserted in the nozzle, the sample fluid introduction portion being configured to introduce the sample fluid in a direction toward the discharge port; and
   a vibration application unit including a vibration portion to be in contact with the sheath fluid, the vibration application unit being configured to apply vibration to the sheath fluid from a direction different from an introduction direction of the sample fluid.
(2) The microparticle separating device according to (1), further including a reflection portion configured to reflect, in the introduction direction of the sample fluid, waves of the sheath fluid generated through vibration application by the vibration application unit.
(3) The microparticle separating device according to (2), in which the reflection portion has a tilted surface tilted with respect to the introduction direction of the sample fluid.
(4) The microparticle separating device according to (3), in which the reflection portion has the tilted surface tilted at approximately 45 degrees with respect to the introduction direction of the sample fluid.
(5) The microparticle separating device according to (2), in which a voltage for charging the droplet is applied to the reflection portion.
(6) The microparticle separating device according to any of (1) to (5), in which the sheath fluid introduction portion introduces the sheath fluid in a direction toward the vibration portion of the vibration application unit.
(7) The microparticle separating device according to (6), in which a plurality of the sheath fluid introduction portions are provided.
(8) The microparticle separating device according to (7), in which
   the vibration application unit includes the vibration portion having a surface having a shape allowing the surface to be in contact with the sheath fluid; and the plurality of sheath fluid introduction portions introduce the sheath fluid in directions different from each other and in a parallel direction as viewed from a direction normal to the surface of the vibration portion.
(9) The microparticle separating device according to any of (1) to (8), further including a discharge portion configured to discharge the sheath fluid in the nozzle.
(10) The microparticle separating device according to (9), in which the discharge portion discharges the sheath fluid in an obliquely upward direction with respect to the introduction direction of the sample fluid.
(11) The microparticle separating device according to any of (1) to (10), in which the vibration application unit is fitted, via a plurality of O-rings, into an opening formed in the nozzle.
(12) The microparticle separating device according to any of (1) to (11), further including a sample fluid introduction portion holding portion disposed in the droplet generation unit and holding the sample fluid introduction portion.
(13) The microparticle separating device according to (12), in which a voltage for applying an electric charge to the droplet is applied to the sample fluid introduction portion holding portion.
(14) A microparticle separating method including: introducing a sheath fluid into a nozzle configured to discharge a droplet containing a sample fluid and the sheath fluid from a discharge port;
   introducing the sample fluid from a sample fluid introduction portion formed in a tubular shape inserted in the nozzle, the sample fluid introduction portion being configured to introduce the sample fluid in a direction toward the discharge port; and
   applying vibration to the sheath fluid from a direction different from an introduction direction of the sample fluid by a vibration portion in contact with the sheath fluid.

### Reference Signs List

1 Microparticle separating device
3 Droplet
100 Droplet generation unit
101 Sheath fluid
102 Sample fluid
110 Flow chamber
111 Sample fluid introduction portion holding portion
112 Reflection portion
115 Discharge port
120, 121 Sheath fluid introduction portion
130 Sample fluid introduction portion
140 Vibration application unit
141 Vibration portion
150 Discharge portion
160 to 162 O-ring

## Claims

1. A microparticle separating device comprising:
a droplet generation unit configured to discharge a droplet containing a sample fluid and a sheath fluid from a discharge port, the sample fluid containing microparticles;
a sheath fluid introduction portion configured to introduce the sheath fluid into the droplet generation unit;
a sample fluid introduction portion formed in a tubular shape inserted in the droplet generation unit, the sample fluid introduction portion being configured to introduce the sample fluid in a direction toward the discharge port; and
a vibration application unit including a vibration portion to be in contact with the sheath fluid, the vibration application unit being configured to apply vibration to the sheath fluid from a direction different from an introduction direction of the sample fluid.

2. The microparticle separating device according to claim 1, further comprising a reflection portion configured to reflect, in the introduction direction of the sample fluid, waves of the sheath fluid generated through vibration application by the vibration application unit.

3. The microparticle separating device according to claim 2, wherein the reflection portion has a tilted surface tilted with respect to the introduction direction of the sample fluid.

4. The microparticle separating device according to claim 3, wherein the reflection portion has the tilted surface tilted at approximately 45 degrees with respect to the introduction direction of the sample fluid.

5. The microparticle separating device according to claim 2, wherein a voltage for charging the droplet is applied to the reflection portion.

6. The microparticle separating device according to claim 1, wherein the sheath fluid introduction portion introduces the sheath fluid in a direction toward the vibration portion of the vibration application unit.

7. The microparticle separating device according to claim 6, wherein a plurality of the sheath fluid introduction portions are provided.

8. The microparticle separating device according to claim 7, wherein
the vibration application unit includes the vibration portion having a surface having a shape allowing the surface to be in contact with the sheath fluid; and
the plurality of sheath fluid introduction portions introduce the sheath fluid in directions different from each other and in a parallel direction as viewed from a direction normal to the surface of the vibration portion.

9. The microparticle separating device according to claim 1, further comprising a discharge portion configured to discharge the sheath fluid in the droplet generation unit.

10. The microparticle separating device according to claim 9, wherein the discharge portion discharges the sheath fluid in an obliquely upward direction with respect to the introduction direction of the sample fluid.

11. The microparticle separating device according to claim 1, wherein the vibration application unit is fitted, via a plurality of O-rings, into an opening formed in the droplet generation unit.

12. The microparticle separating device according to claim 1, further comprising a sample fluid introduction portion holding portion disposed in the droplet generation unit and holding the sample fluid introduction portion.

13. The microparticle separating device according to claim 12, wherein a voltage for applying an electric charge to the droplet is applied to the sample fluid introduction portion holding portion.

14. A microparticle separating method comprising:
introducing a sheath fluid into a droplet generation unit configured to discharge a droplet containing a sample fluid and the sheath fluid from a discharge port;
introducing the sample fluid from a sample fluid introduction portion formed in a tubular shape inserted in the droplet generation unit, the sample fluid introduction portion being configured to introduce the sample fluid in a direction toward the discharge port; and
applying vibration to the sheath fluid from a direction different from an introduction direction of the sample fluid by a vibration portion in contact with the sheath fluid.
